# EUROPÄISCHE PATENTSCHRIFT

(11) **EP 3 655 258 B1**
(45) Veröffentlichungstag und Bekanntmachung des Hinweises auf die Patenterteilung: **18.05.2022**
(21) Anmeldenummer: 18745814.6
(22) Anmeldetag: 03.07.2018
(51) Int. Cl.: B60B 27/00, C23C 4/08, C23C 24/04, C09D 5/10, C08K 7/06, C09D 7/40

(54) **RADLAGERANORDNUNG MIT EINER BESCHICHTUNG**
WHEEL BEARING UNIT WITH COATING
UNITÉ DE ROULEMENT POUR ROUE AVEC UNE COUCHE

(30) Priorität: 21.07.2017 DE 102017116514
(43) Veröffentlichungstag der Anmeldung: 27.05.2020
(73) Patentinhaber: Schaeffler Technologies AG & Co. KG, 91074 Herzogenaurach (DE)
(72) Erfinder: MADRON, Milan, 90453 Nürnberg (DE); MUSAYEV, Yashar, 90425 Nürnberg (DE); HESSLER, Jürgen, 97520 Röthlein (DE)
(86) Internationale Anmeldenummer: PCT/DE2018/100605
(87) Internationale Veröffentlichungsnummer: WO 2019/015712

(56) Entgegenhaltungen:
- WO-A1-2006/007985
- WO-A1-2008/145163
- DE-A1-102006 042 632
- DE-A1-102008 055 716
- DE-A1-102015 119 171
- DE-A1-102015 216 657
- DE-B3-102006 006 910
- JP-A- 2005 054 910

## Beschreibung

Die Erfindung betrifft eine Radlageranordnung für ein Kraftfahrzeug. Ferner betrifft die Erfindung ein Kraftfahrzeug mit einer solchen Radlageranordnung sowie insbesondere ein Verfahren zur Beschichtung einer Radlageranordnung.

Die JP 20055054910 A offenbart eine Radlageranordnung für ein Kraftfahrzeug.

Aus der DE 10 2015 216 657 A1 geht ein Verfahren zur Herstellung eines metallischen Lagerbauteils, wie beispielsweise einem Radlager, hervor, bei dem eine vor Korrosion zu schützende Außenfläche des metallischen Lagerbauteils in den Wirkbereich einer Cold-Spray-Einheit ausgerichtet wird, wobei eine Beschichtung zum Korrosionsschutz mit einem Low Pressure Cold-Spray-Verfahren auf die zu schützende Außenfläche des metallischen Lagerbauteils aufgetragen wird.

Die DE 102015119171 A1 offenbart ein Verfahren zur Beschichtung einer Radlageranordnung.

Die Aufgabe der Erfindung besteht darin, eine Radlageranordnung für ein Kraftfahrzeug weiterzuentwickeln, und insbesondere die Widerstandsfähigkeit der Radlageranordnung gegenüber Korrosion zu erhöhen.

Die Aufgabe wird gelöst durch den Gegenstand der Patentansprüche 1 und 4. Bevorzugte Ausführungsformen sind den abhängigen Ansprüchen zu entnehmen.

An der erfindungsgemäßen Radlageranordnung ist vollständig oder zumindest teilweise eine Oberflächenbeschichtung ausgebildet. Mithin ist die Oberflächenbeschichtung zumindest an einem Teil der Oberfläche der Radlageranordnung ausgebildet. Dabei wird vorzugsweise eine innenliegende Verzahnungsgeometrie der Radlageranordnung, die beispielsweise mit einem Wellenelement oder einer Achse des Kraftfahrzeugs in Zahneingriff tritt, nicht mit einer Oberflächenbeschichtung versehen. Ferner ist es aber auch denkbar, dass die Oberflächenbeschichtung an der gesamten Oberfläche der Radlageranordnung ausgebildet ist.

Mit anderen Worten ist die Oberflächenbeschichtung im Wesentlichen eine nichtelektrolytisch aufgebrachte Beschichtung und besteht hauptsächlich aus Zinklamellen, wobei auch Aluminiumlamellen in der Oberflächenbeschichtung ausgebildet sein können. Die Zinklamellenbeschichtung umfasst im Wesentlichen Zinkanteile, insbesondere Zink- und Aluminiumanteile. Dabei umfasst die zur Bildung der Beschichtung verwendete Beschichtungszusammensetzung erfindungsgemäß Zinkpulver, Aluminiumpulver, Titantetrabutanolat und weitere Bestandteile.

Eine mögliche Beschichtungszusammensetzung umfasst beispeilsweise 50 - 60 % Zinkpulver, 5 - 10 % Aluminiumpulver, 5 - 10 % Titantetrabutanolat, 10 - 20 % Butyltitanatmonomer und Kohlenwasserstoffe. Eine weitere mögliche Beschichtungszusammensetzung umfasst beispeilsweise 30 - 50 % Zinkpulver, 2,5 - 5 % Aluminiumpulver, 30 - 50 % Titantetrabutanolat, 2,5 - 5 % Trimethoxyvinylsilan und Kohlenwasserstoffe.

Insbesondere erzeugt die Zinklamellenbeschichtung einen kathodischen Schutz der Oberfläche der Radlageranordnung, und zeichnet sich im Vergleich zu elektrolytisch verzinkten Oberflächen und galvanisch aufgebrachten Zinkschichten durch einen hohen Korrosionsschutz und eine gute chemische Beständigkeit aus. Darüber hinaus wird das Eindiffundieren beispielsweise von Wasserstoff in die Oberfläche der Radlageranordnung durch eine Barrierewirkung der Oberflächenbeschichtung zumindest verringert oder verhindert.

Gemäß einer bevorzugten Ausführungsform ist die Oberflächenbeschichtung funktionsrelevant an der äußeren Oberfläche der Radlageranordnung ausgebildet. Eine gezielt partielle Beschichtung der Radlageranordnung kann vorzugsweise durch ein Abkleben oder Abdecken der nicht zu beschichtenden Flächen an der Radlageranordnung, beispielsweise eine innenliegende Verzahnung, ermöglicht werden. Mithin weisen lediglich die äußeren, das heißt die sichtbaren Oberflächen der Radnabe eine Oberflächenbeschichtung auf. Die Oberflächenbeschichtung von Radlagern ist besonders vorteilhaft, da ein Festsitzen eines auf der Achse des Kraftfahrzeugs befestigten Rades aufgrund von Korrosion verhindert wird und somit ein einfacher, leichter Austausch des Rades ermöglicht wird. Gleiches gilt auch für andere Lagerbauteile, die sich in Kontakt mit anderen Metalloberflächen von Einbauteilen befinden, so dass durch die Oberflächenbeschichtung ein Festsitzen des Lagerbauteils an einem Einbauteil verhindert wird.

Unter der Oberflächenbeschichtung ist ein Schichtsystem mit mindestens einer Schicht zu verstehen. Insbesondere können auch mehrere Schichten zumindest teilweise übereinander und/oder nebeneinander ausgebildet sein.

Vorzugsweise weist die Oberflächenbeschichtung eine Schichtdicke von mindestens 10 µm auf. Bevorzugt weist die Oberflächenbeschichtung eine Schichtdicke von höchstens 20 µm auf. Gemäß der Salzsprühnebelprüfung aus DIN EN ISO 9227, zur Bewertung einer Korrosionsschutzwirkung unter anderem von metallischen Überzügen, weist die als Zinklamellenbeschichtung ausgebildete Oberflächenbeschichtung bei einer Schichtdicke von 10 µm einen Korrosionsschutz gegen Rotrost von bis zu 720 Stunden auf und erfüllt dadurch die hohen Sicherheitsanforderungen von Radnaben in Radlagern. Zusätzlich verringert die Oberflächenbeschichtung den Einfluss von Korrosionsmedien wie Sauerstoff oder Elektrolyte und erhöht die Schutzdauer des Bauteils.

Insbesondere wird die erfindungsgemäße Radlageranordnung in einem Kraftfahrzeug verwendet. Unter einem Kraftfahrzeug ist ein Fahrzeug zu verstehen, das nach seiner Bauart und seinen besonderen, mit dem Fahrzeug fest verbundenen Einrichtungen zur Beförderung von Personen oder Gütern. Beispielsweise ist unter einem Kraftfahrzeug ein Personenkraftfahrzeug oder ein Lastkraftfahrzeug zu verstehen.

Nach einem erfindungsgemäßen Verfahren zur Beschichtung einer Radlageranordnung wird zumindest eine zu beschichtende Bauteiloberfläche der Radlageranordnung mittels eines fluiden Reinigungsmediums gereinigt, wobei das Reinigungsmedium zumindest teilweise anschließend von der zumindest einen Bauteiloberfläche entfernt wird, wobei die zumindest eine Bauteiloberfläche in einem weiteren Verfahrensschritt mit einem Beschichtungsmedium zur Erzeugung einer als Zinklamellenbeschichtung ausgebildeten Oberflächenbeschichtung beschichtet wird, und wobei die Oberflächenbeschichtung abschließend bei einer Aushärtetemperatur von mindestens 15°C ausgehärtet wird.

Unter dem Reinigungsmedium ist eine Art Waschmittel zu verstehen, mit dem die Oberfläche der Radlageranordnung zumindest teilweise von Prozessmedien, wie Staub, öl- oder fetthaltigen Rückständen, Späne, Flecken und/oder Silikon gereinigt werden kann. Durch das erfindungsgemäße Verfahren können die zu entfernenden Prozessmedien vollständig von der Radlageranordnung entfernt werden. Es ist jedoch möglich, das geringe Rückstände von Prozessmedien auf der Oberfläche der Radlageranordnung zurückbleiben können, ohne die Qualität der in einem nachfolgenden Verfahrensschritt zu erzeugenden Oberflächenbeschichtung zu mindern.

Bevorzugt ist das Reinigungsmedium ein lösemittelhaltiges Reinigungsmedium. Lösemittelhaltige Reinigungsmedien zeichnen sich durch eine schnelle Wirkung, eine gute Materialverträglichkeit und eine einfache Anwendbarkeit aus. Mithin reagiert das Reinigungsmedium nicht mit den zu behandelnden Oberflächen, das heißt dem Werkstoff der Radlageranordnung. Das Reinigungsmedium wird vorzugsweise auf die zu behandelnden Bauteiloberflächen gesprüht, wobei auch ein manuelles Auftragen des Reinigungsmediums auf die Radlageranordnung denkbar ist. Mit anderen Worten erfolgt die Reinigung der zu beschichtenden Bauteiloberflächen nasschemisch. Dabei findet insbesondere eine Vorbehandlung der Radlageranordnung statt. Dies ist besonders vorteilhaft für eine gezielte Applikation des Reinigungsmediums an den gewünschten Stellen des Bauteils. Nach der Applikation des Reinigungsmediums auf den zu behandelnden Bauteiloberflächen wird die Radlageranordnung mit einer hohen Drehzahl zentrifugiert, sodass überschüssiges Reinigungsmedium durch die auftretende Fliehkraft von den Bauteiloberflächen entfernt wird. Insbesondere wird das gesamte Reinigungsmedium von der Radlageranordnung entfernt, jedoch sind prozessbedingte Rückstände auf den Bauteiloberflächen möglich, sodass leicht feuchte Bauteiloberflächen nach dem Entfernen des überschüssigen Reinigungsmediums vorliegen können.

Vorzugsweise erfolgt die Beschichtung der zumindest einen Bauteiloberfläche mittels eines Sprühprozesses. Dabei wird das Beschichtungsmedium beispielsweise mittels einer Sprühvorrichtung manuell oder vollautomatisch auf die zu beschichtende Bauteiloberfläche der Radlageranordnung aufgetragen. Alternativ kann die Radlageranordnung in Abhängigkeit der Bauteilanforderungen auch zumindest teilweise in das Beschichtungsmedium eingetaucht werden, wobei das Beschichtungsmedium die zu beschichtenden Bauteiloberflächen zur Erzeugung der Oberflächenbeschichtung benetzt. Dies ist insbesondere für die Montage der Radlageranordnung von Vorteil, da die Oberflächenbeschichtung erst nach einer vollständigen Montage des Radlagers auf die Bauteiloberflächen aufgebracht werden kann. Mithin werden Beschädigungen der Oberflächenbeschichtung während des Montageprozesses der Radlageranordnung vermieden.

Nach dem Beschichtungsschritt erfolgt das Aushärten der Oberflächenbeschichtung zumindest bei Raumtemperatur. Gemäß einem bevorzugten Ausführungsbeispiel erfolgt das Aushärten der Oberflächenbeschichtung bei einer Aushärtetemperatur von höchstens 80°C. Das Beschichtungsmedium reagiert dabei mit der Luftfeuchtigkeit und der Bauteiloberfläche der Radlageranordnung und bildet die Oberflächenbeschichtung aus. Zusätzlich kann das Beschichtungsmedium mit den prozessbedingten feuchten Rückständen des Reinigungsmediums auf den Bauteiloberflächen zur Bildung der Oberflächenbeschichtung reagieren. Vorteilhaft ist dabei die niedrige Prozesstemperatur während des erfindungsgemäßen Verfahrens.

Die Erfindung schließt die technische Lehre ein, dass das Aushärten der Oberflächenbeschichtung über eine Aushärtedauer von mindestens 10 Minuten erfolgt. Insbesondere steigt die Qualität der Oberflächenbeschichtung mit der Dauer der Aushärtung an.

Weitere die Erfindung verbessernde Maßnahmen werden nachstehend gemeinsam mit der Beschreibung eines bevorzugten Ausführungsbeispiels der Erfindung anhand der Figuren näher dargestellt, wobei gleiche oder ähnliche Elemente mit dem gleichen Bezugszeichen versehen sind. Hierbei zeigt
- Figur 1: eine schematische Perspektivdarstellung einer erfindungsgemäßen Radlageranordnung,
- Figur 2: eine schematische Schnittdarstellung der erfindungsgemäßen Radlageranordnung gemäß Figur 1, und
- Figur 3: eine schematische Detailschnittdarstellung der erfindungsgemäßen Radlageranordnung gemäß Figur 2.

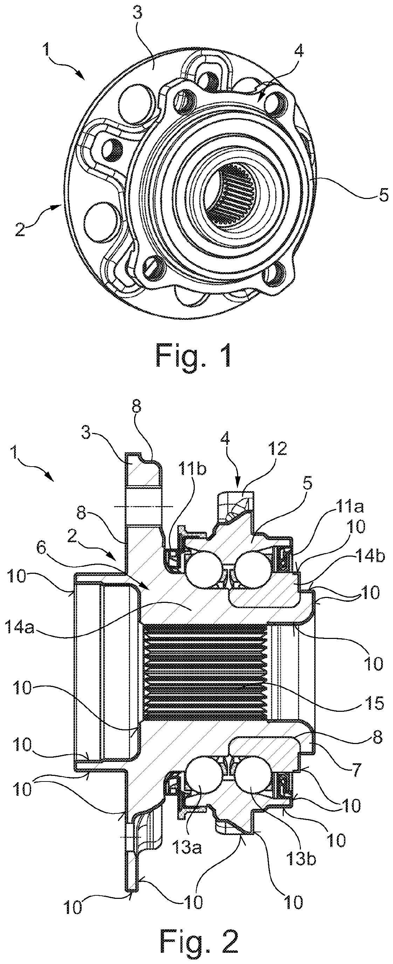

Gemäß Figur 1 weist eine erfindungsgemäße Radlageranordnung 1 eine Radnabe 2 eines - hier nicht dargestellten - Kraftfahrzeugs auf. Die Radnabe 2 weist an einem axialen Ende einen Radflansch 3 zur Befestigung einer nicht dargestellten Radfelge und einer Bremsscheibe auf. Ein Außenring 5 der Radlageranordnung 1 ist mittels eines Wälzlagers 4 drehbar auf der Radnabe 2 gelagert.

Nach Figur 2 ist die Radlageranordnung 1 nach einem Aushärteprozess dargestellt. Auf der Radnabe 2 ist ein zweireihiges Wälzlager 4 in Form eines Schrägkugellagers in O-Anordnung angeordnet, das durch zwei Dichtungen 11a, 11b gegen Feuchtigkeit und Schmutz abgedichtet ist. Das Wälzlager 4 weist einen Außenring 5, an den ein Befestigungsflansch 12 angeformt ist, sowie einen Innenring 6 auf. Zwischen dem Außenring 5 und Innenring 6 sind als Wälzkörper dienende Lagerkugeln 13a, 13b angeordnet. Der Innenring 6 besteht aus zwei Lagerinnenringen 14a, 14b, wobei der axial äußere Lagerinnenring 14a einstückig an die Radnabe 2 angeformt ist, während der axial innere Lagerinnenring 14b ein separates Bauteil ist, welches auf die Radnabe 2 aufgeschoben ist. Die Radnabe 2 weist einen sich im Wesentlichen radial erstreckenden durch Wälznieten ausgebildeten Bund 7 auf, welcher als axialer Anschlag für den separaten Lagerinnenring 14b dient.

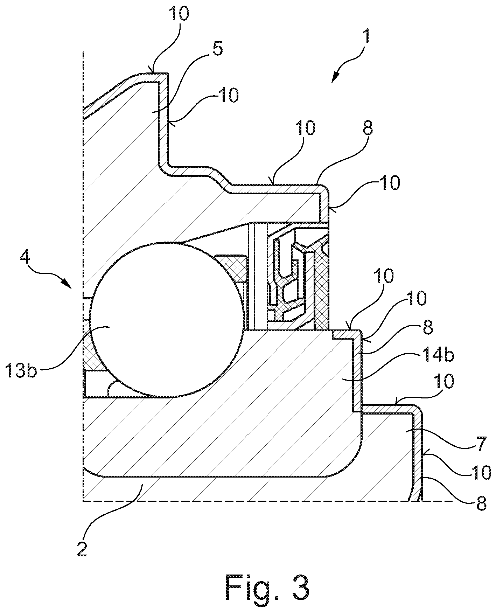

Gemäß den Figuren 2 und 3 sind an äußeren Bauteiloberflächen 10 der Radlageranordnung 1 mittels eines Verfahrens zur Beschichtung der Radlageranordnung 1 teilweise eine Oberflächenbeschichtung 8 zur Verbesserung eines Korrosionsschutzes ausgebildet, wobei die Oberflächenbeschichtung 8 als Zinklamellenbeschichtung teilweise an der Radnabe 2, am Außenring 5 sowie am inneren Lagerinnenring 14b ausgebildet ist. Mithin ist die Oberflächenbeschichtung 8 an allen sichtbaren, äußeren, metallischen Bauteiloberflächen der Radlageranordnung 1 ausgebildet. Dies geht insbesondere aus der detaillierten Schnittdarstellung in Figur 3 hervor. Eine innere Verzahnungsgeometrie 15 der Radnabe 2 weist keine Oberflächenbeschichtung 8 auf. Die Oberflächenbeschichtung 8 ist jeweils umlaufend um die Radlageranordnung 1 ausgebildet und weist eine Schichtdicke von mindestens 10 µm und höchstens 20 µm auf.

### Bezugszeichenliste

- 1: Radlageranordnung
- 2: Radnabe
- 3: Radflansch
- 4: Wälzlager
- 5: Außenring
- 6: Innenring
- 7: Bund
- 8: Oberflächenbeschichtung
- 9: Wälzkörper
- 10: Bauteiloberfläche
- 11a, 11b: Dichtung
- 12: Befestigungsflansch
- 13a, 13b: Lagerkugel
- 14a, 14b: Lagerinnenring
- 15: Verzahnungsgeometrie

## Patentansprüche

1. Radlageranordnung (1) für ein Kraftfahrzeug, umfassend eine Radnabe (2), wobei die Radnabe (2) mit einem Radflansch (3) verbunden ist, wobei auf der Radnabe (2) ein mehrreihiges Wälzlager (4) mit einem Außenring (5) und einem Innenring (6) angeordnet ist, wobei der Innenring (6) zwei Lagerinnenringe (14a, 14b) umfasst, wobei ein axial äußerer Lagerinnenring (14a) einstückig an die Radnabe (2) angeformt ist und wobei ein axial innerer Lagerinnenring (14b) ein separates Bauteil ist, welches auf die Radnabe (2) aufgezogen ist und durch einen auf eine Stirnfläche des inneren Lagerinnenringes (14b) einwirkenden Bund (7) der Radnabe (2) axial vorgespannt ist, wobei an der Radlageranordnung (1) zumindest teilweise eine Oberflächenbeschichtung (8) zur Verbesserung eines Korrosionsschutzes ausgebildet ist, wobei die Oberflächenbeschichtung (8) als Zinklamellenbeschichtung ausgebildet ist, wobei ein zur Bildung der Oberflächenbeschichtung (8) verwendetes Beschichtungsmedium überwiegend Zinkpulver, Aluminiumpulver und Titantetrabutanolat sowie weitere Bestandteile umfasst und bei einer Aushärtetemperatur von mindestens 15°C und von höchstens 80°C aushärtend ist.

2. Radlageranordnung (1) nach Anspruch 1, wobei die Oberflächenbeschichtung (8) eine Schichtdicke von mindestens 10 µm und von höchstens 20 µm aufweist.

3. Radlageranordnung (1) nach einem der vorhergehenden Ansprüche, wobei die Oberflächenbeschichtung (8) an einer gesamten Oberfläche der Radlageranordnung (1) ausgebildet ist.

4. Radlageranordnung (1) nach einem der Ansprüche 1 oder 2, wobei die Oberflächenbeschichtung (8) an allen sichtbaren, äußeren, metallischen Bauteiloberflächen (10) der Radlageranordnung (1) ausgebildet ist und wobei die Oberflächenbeschichtung (8) eine innenliegende Verzahnungsgeometrie (15) der Radlageranordnung (1), die dazu vorgesehen ist, mit einem Wellenelement oder einer Achse eines Kraftfahrzeugs in Zahneingriff zu treten, nicht bedeckt.

5. Verfahren zur Beschichtung einer Radlageranordnung (1) nach einem der Ansprüche 1 bis 4, wobei das Verfahren folgende Verfahrensschritte umfasst:
- Reinigung von zumindest einer zu beschichtenden Bauteiloberfläche (10) der Radlageranordnung (1) mittels eines fluiden Reinigungsmediums;
- zumindest teilweises Entfernen des Reinigungsmediums von der zumindest einen Bauteiloberfläche (10);
- Beschichtung der zumindest einen Bauteiloberfläche (10) mit einem Beschichtungsmedium zur Erzeugung einer als Zinklamellenbeschichtung ausgebildeten Oberflächenbeschichtung (8), wobei das zur Bildung der Oberflächenbeschichtung (8) verwendete Beschichtungsmedium überwiegend Zinkpulver, Aluminiumpulver und Titantetrabutanolat sowie weitere Bestandteile umfasst; und
- Aushärten der Oberflächenbeschichtung (8) bei einer Aushärtetemperatur von mindestens 15°C und von höchstens 80°C.

6. Verfahren nach Anspruch 5, wobei die Beschichtung der zumindest einen Bauteiloberfläche (10) mittels eines Sprühprozesses durchgeführt wird.

7. Verfahren nach einem der Ansprüche 5 und 6, wobei das Aushärten der Oberflächenbeschichtung (8) bei Raumtemperatur erfolgt.

8. Verfahren nach einem der Ansprüche 5 bis 7,
**dadurch gekennzeichnet, dass** das Aushärten der Oberflächenbeschichtung (8) über eine Aushärtedauer von mindestens 10 Minuten erfolgt.

9. Kraftfahrzeug, umfassend eine Radlageranordnung (1) nach einem der Ansprüche 1 bis 4.

## Claims

1. A wheel bearing unit (1) for a motor vehicle, comprising a wheel hub (2), wherein the wheel hub (2) is connected to a wheel flange (3), wherein a multi-row roller bearing (4) having an outer ring (5) and an inner ring (6) is arranged on the wheel hub (2), wherein the inner ring (6) comprises two bearing inner rings (14a, 14b), wherein an axially outer bearing inner ring (14a) is formed in one piece on the wheel hub (2) and wherein an axially inner bearing inner ring (14b) is a separate component, which is mounted on the wheel hub (2) and is axially pretensioned by a collar (7) of the wheel hub (2), which collar acts on an end surface of the inner bearing inner ring (14b), wherein at least partially a surface coating (8) for improving corrosion protection is formed on the wheel bearing unit (1), wherein the surface coating (8) is formed as a zinc flake coating, wherein a coating medium used to form the surface coating (8) comprises predominantly zinc powder, aluminium powder and titanium tetrabutanolate and other constituents and is cured at a curing temperature of at least 15°C and at most 80°C.

2. The wheel bearing unit (1) according to claim 1, wherein the surface coating (8) has a coating thickness of at least 10 µm and at most 20 µm.

3. The wheel bearing unit (1) according to any one of the preceding claims, wherein the surface coating (8) is formed on an entire surface of the wheel bearing unit (1).

4. The wheel bearing unit (1) according to any one of claims 1 or 2, wherein the surface coating (8) is formed on all visible, outer, metal component surfaces (10) of the wheel bearing unit (1) and wherein the surface coating (8) does not cover an internal gear geometry (15) of the wheel bearing unit (1) intended to mesh with a shaft member or an axle of a motor vehicle.

5. A method for coating a wheel bearing unit (1) according to any one of claims 1 to 4, wherein the method comprises the following method steps:
- Cleaning at least one component surface (10) to be coated of the wheel bearing unit (1) by means of a fluid cleaning medium;
- At least partial removal of the cleaning medium from the at least one component surface (10);
- Coating the at least one component surface (10) with a coating medium to generate a surface coating (8) formed as a zinc flake coating, wherein the coating medium used to form the surface coating (8) comprises predominantly zinc powder, aluminium powder and titanium tetrabutanolate and other constituents; and
- Curing the surface coating (8) at a curing temperature of at least 15°C and at most 80°C.

6. The method according to claim 5, wherein the coating of the at least one component surface (10) is performed by means of a spraying process.

7. The method according to any one of claims 5 and 6, wherein the curing the surface coating (8) is carried out at room temperature.

8. The method according to any one of claims 5 to 7,
**characterised in that** the curing of the surface coating (8) is carried out over a curing period of at least 10 minutes.

9. A motor vehicle, comprising a wheel bearing unit (1) according to any one of claims 1 to 4.

## Revendications

1. Unité de roulement pour roue (1) pour véhicule automobile, comprenant un moyeu de roue (2), le moyeu de roue (2) étant relié à un flasque de roue (3), un palier à rouleaux (4) à plusieurs rangées muni d'un anneau externe (5) et d'un anneau interne (6) étant disposé sur le moyeu de roue (2), l'anneau interne (6) comprenant deux bagues-palier internes (14a, 14b), une bague-palier interne (14a) axialement plus externe étant moulée d'un seul tenant sur le moyeu de roue (2) et une bague-palier interne (14b) axialement plus interne étant une pièce séparée, montée sur le moyeu de roue (2) et accouplée axialement au moyeu de roue (2) au moyen d'une liaison fonctionnelle (7) sur une face avant de la bague-palier interne (14b) la plus interne, un revêtement de surface (8) étant au moins partiellement déposé sur l'unité de roulement pour roue (1), afin de mieux la protéger contre la corrosion, le revêtement de surface (8) étant sous forme d'un revêtement en lamelles de zinc, l'un des agents de revêtement utilisés pour former le revêtement de surface (8) étant constitué majoritairement de poudre de zinc, de poudre d'aluminium et de tétrabutanolate de titane ainsi que d'autres composants, et ayant été durci à une température de durcissement d'au moins 15 °C et d'au plus 80 °C.

2. Unité de roulement pour roue (1) selon la revendication 1, l'épaisseur de la couche de revêtement de surface (8) étant d'au moins 10 µm et d'au plus 20 µm.

3. Unité de roulement pour roue (1) selon l'une quelconque des revendications précédentes, le revêtement de surface (8) étant déposé sur une surface entière de l'unité de roulement pour roue (1).

4. Unité de roulement pour roue (1) selon l'une quelconque des revendications 1 ou 2, le revêtement de surface (8) étant formé sur toutes les surfaces de pièce (10) visibles, externes, métalliques de l'unité de roulement pour roue (1) et le revêtement de surface (8) ne couvrant pas une géométrie d'engrenage (15) interne de l'unité de roulement pour roue (1), qui est prévue pour s'engrener à un élément d'arbre ou à un essieu d'un véhicule automobile.

5. Procédé de revêtement d'une unité de roulement pour roue (1) selon l'une quelconque des revendications 1 à 4, le procédé comprenant les étapes suivantes :
- nettoyage d'au moins une surface de pièce (10) à recouvrir de l'unité de roulement pour roue (1) au moyen d'un agent nettoyant fluide ;
- élimination au moins partielle de l'agent nettoyant de l'au moins une surface de pièce (10) ;
- revêtement de l'au moins une surface de pièce (10) à l'aide d'un agent de revêtement afin d'obtenir un revêtement de surface (8) sous forme de revêtement en lamelles de zinc, l'agent de revêtement utilisé pour former un revêtement de surface (8) étant constitué majoritairement de poudre de zinc, de poudre d'aluminium et de tétrabutanolate de titane, ainsi que d'autres composants ; et
- durcissement du revêtement de surface (8) à une température de durcissement d'au moins 15 °C et d'au plus 80 °C.

6. Procédé selon la revendication 5, le revêtement de l'au moins une surface de pièce (10) étant réalisé au moyen d'un procédé de pulvérisation.

7. Procédé selon l'une quelconque des revendications 5 et 6, le durcissement du revêtement de surface (8) se déroulant à température ambiante.

8. Procédé selon l'une quelconque des revendications 5 à 7,
**caractérisé en ce que** le durcissement du revêtement de surface (8) se déroule sur une durée de durcissement d'au moins 10 minutes.

9. Véhicule automobile comprenant une unité de roulement pour roue (1) selon l'une quelconque des revendications 1 à 4.
